# EUROPÄISCHE PATENTANMELDUNG

(11) **EP 0 692 291 A1**
(43) Veröffentlichungstag der Anmeldung: **17.01.1996**
(21) Anmeldenummer: 95106901.2
(22) Anmeldetag: 08.05.1995
(51) Int. Cl.: B01D 21/00, C02F 1/38, B04B 1/02, B04B 11/04

(54) **Einrichtung zum Entfernen von Feststoffpartikeln aus einer Arbeitsflüssigkeit**

(30) Priorität: 15.06.1994 DE 4420723
(71) Anmelder: Dürr-Dental GmbH & Co. KG, D-74321 Bietigheim-Bissingen (DE)
(72) Erfinder: Hoffmann, Hans-Joachim, D-73630 Remshalden (DE); Prager, Ulrich, D-74360 Güglingen (DE)
(74) Vertreter: Ostertag, Reinhard

(57) **Zusammenfassung**

Eine Einrichtung zum Entfernen von Feststoffpartikeln geringer Dichte aus einer Arbeitsflüssigkeit umfaßt eine Zentrifuge (20) sowie einen unter dieser angeordneten Sedimentierbehälter (48). Letzterer hat ein verglichen mit dem Volumen eines aus der Zentrifugentrommel (24) beim Anhalten derselben absinkenden Wasserringes (40) großes Volumen, so daß die die Feststoffpartikel enthaltenden Wasserringe über lange Zeit im Sedimentierbehälter (48) verbleiben, bevor klarer Überstand aus dem Sedimentierbehälter unter Verwendung eines Hebers (62) in einen Vorratsbehälter (12) für die Arbeitsflüssigkeit überführt wird.

## Beschreibung

Die Erfindung betrifft eine Einrichtung zum Entfernen von Feststoffpartikeln aus einer Arbeitsflüssigkeit gemäß dem Oberbegriff des Anspruches 1.

Eine derartige Einrichtung ist in der DE 35 21 929 A1 beschrieben.

Diese dient dazu, aus dem an einem dentalen Arbeitsplatz anfallenden Abwasser feine Amalgampartikel abzuscheiden, die nicht ins öffentliche Kanalnetz gelangen dürfen.

Bei dieser bekannten Einrichtung ist der Sedimentierbehälter so bemessen, daß er gerade den aus der Zentrifugentrommel beim Anhalten absinkenden Wasserring mit den in diesem enthaltenden Amalgampartikeln aufnehmen kann. Beim Wiederanlaufen der Zentrifugentrommel wird klarer Überstand aus dem Sedimentierbehälter wieder ins Innere der Zentrifugentrommel zurückgepumpt.

Eine derartige Einrichtung eignet sich nur zur Verwendung mit solchen Feststoffpartikeln, die einerseits hohes spezifisches Gewicht aufweisen und darüber hinaus nur in geringer Menge in der zu behandelnden Arbeitsflüssigkeit enthalten sind.

Für manche Anwendungsfälle wäre es nun wünschenswert, wenn man auch Feststoffpartikel mit nicht sehr stark von Eins verschiedenem spezifischem Gewicht aus einer Arbeitsflüssigkeit unter Verwendung einer Zentrifuge abscheiden könnte, wobei weiterhin die Zentrifugentrommel selbst nicht als Sammelbehälter dienen soll, da letztere nur schwierig zugänglich und auszutauschen ist.

Zur Lösung der oben angegebenen Aufgabe schafft die Erfindung eine Einrichtung zum Entfernen von Feststoffpartikeln aus einer Arbeitsflüssigkeit mit den im Anspruch 1 angegebenen Merkmalen.

Bei der erfindungsgemäßen Einrichtung hat der Sedimentierbehälter ein verglichen mit dem Volumen des aus der Zentrifugentrommel absinkenden Wasserringes großes Volumen, so daß sich im Sedimentierbehälter eine Vielzahl von abgesunkenen Wasserringen befinden kann und die entsprechende Gesamtmenge an Arbeitsflüssigkeit über einen verhältnismäßig langen Zeitraum im Sedimentierbehälter verbleibt, bevor dann eine Abgabe über die Reinwasser-Abgabeleitung erfolgt. Durch diese stark erhöhte Verweilzeit im Sedimentierbehälter wird das schlechtere Sedimentierverhalten von Feststoffpartikeln kleinerer Dichte kompensiert.

Ein typisches Anwendungsbeispiel für eine erfindungsgemäße Einrichtung ist z. B. das Entfernen von Schleifstaub aus der Arbeitsflüssigkeit von Maschinen zum Profilschleifen von Brillengläsern aus Glas und Kunststoff. Bei derartigen Schleifmaschinen findet eine Volumenzerspanung des Brillenglases statt, und hierdurch wird die Arbeitsflüssigkeit in sehr starkem Maße mit ihrerseits scharfkantigen und abrasiven Feststoffpartikeln angereichert. Um die Arbeitsflüssigkeit im Kreislauf umwälzen zu können, ist es notwendig, die Feststoffpartikel mit hohem Abscheidegrad aus der Arbeitsflüssigkeit zu entfernen, damit sie nicht die auf optische Güte bearbeiteten Oberflächen der Brillengläser beschädigen. Die typische Dichte für Kunststoffmaterial, aus welchem Brillengläser hergestellt werden, liegt bei etwa 1,2 g/cm³, und für derartige Feststoffpartikel wurde mit einer erfindungsgemäßen Einrichtung ein Abscheidegrad von über 75% erhalten, was in der Praxis erlaubt, die Arbeitsflüssigkeit über eine sehr große Anzahl von Arbeitszyklen hinweg (etwa 150 Schleifzyklen) zu verwenden. Hierdurch erhält man eine erhebliche Flüssigkeitsersparnis.

Vorteilhafte Weiterbildungen sind in Unteransprüchen angegeben.

Eine Einrichtung gemäß Anspruch 2 zeichnet sich durch besonders einfachen mechanischen Aufbau aus. Da das Abnehmen des Reinwassers erheblich über demjenigen Punkt erfolgt, bei welchem das aus der Zentrifugentrommel absinkende Wasser eingeleitet wird, hat man eine sehr gute Sedimentierwirkung.

Mit der Weiterbildung der Erfindung gemäß Anspruch 3 wird erreicht, daß das Abziehen von Reinwasser aus dem Sedimentierbehälter chargenweise erfolgt. Man erhält so eine nochmals verlängerte Verweilzeit im Sedimentierbehälter, insbesondere dann, wenn das Volumen des Sedimentierbehälters ausreicht, die gesamte Anzahl innerhalb eines Arbeitstages aus der Zentrifugentrommel absinkender Wasserringe aufzunehmen, so daß der Sedimentationsprozeß auch über die Nacht hinweg läuft.

Die Weiterbildung der Erfindung gemäß Anspruch 4 ist im Hinblick auf ein Einspeisen des aus der Zentrifugentrommel absinkenden Wasserringes in den Sedimentierbehälter bei einer möglichst tiefen Stelle desselben von Vorteil. Dabei ist das Ende des Schlammeinleitrohres tiefer vorgesehen als das Ende der Reinwasser-Abgabeleitung, liegt andererseits aber über dem Boden des Sedimentierbehälters, so daß dort schon gebildete Schichten aus Feststoffpartikeln, die bei der geringen Dichte der Feststoffpartikel nur begrenzte mechanische Festigkeit haben, nicht durch das Einleiten des absinkenden Wasserringes wieder aufgewirbelt werden.

Auch die Weiterbildung der Erfindung gemäß Anspruch 5 ist im Hinblick auf das Vermeiden eines direkten Überganges von Feststoffpartikel enthaltendem Wasser vom Schlammeinleitrohr zur Reinwasser-Abgabeleitung von Vorteil.

Bei einer Einrichtung gemäß Anspruch 6 können die sich im Sedimentierbehälter bildenden Sedimente auf besonders einfache Weise entsorgt werden.

Dabei ist mit der Weiterbildung der Erfindung gemäß Anspruch 7 gewährleistet, daß beim Abnehmen des abnehmbaren Behälterabschnittes keine Arbeitsflüssigkeit verschüttet wird.

Eine Einrichtung gemäß Anspruch 8 kann auch in Verbindung mit Arbeitsflüssigkeiten verwendet werden, die zum Schäumen neigen. Aus dem insgesamt geschlossenen Sedimentierbehälter kann kein Schaum austreten.

Mit der Weiterbildung der Erfindung gemäß Anspruch 9 wird erreicht, daß die direkt von der Zentrifuge abgegebene Klarwassermenge und das aus dem Sedimentierbehälter abgezogene Reinwasser im wesentlichen an der gleichen Stelle dem Vorratsbehälter für die Arbeitsflüssigkeit zugeführt werden.

Die Weiterbildung der Erfindung gemäß Anspruch 10 ist im Hinblick auf das Erzielen eines niedrigen Gehaltes an Feststoffpartikeln in der Arbeitsflüssigkeit auch bei schlechterem Sedimentierverhalten von Vorteil. Die Arbeitsflüssigkeit kommt nur über die Zentrifuge, die auch bei nahe bei Eins liegenden Dichten noch mit gutem Abschiedegrad arbeitet, in den Kreislauf zurück.

Nachstehend wird die Erfindung anhand von Ausführungsbeispielen unter Bezugnahme auf die Zeichnung näher erläutert. In dieser zeigen:

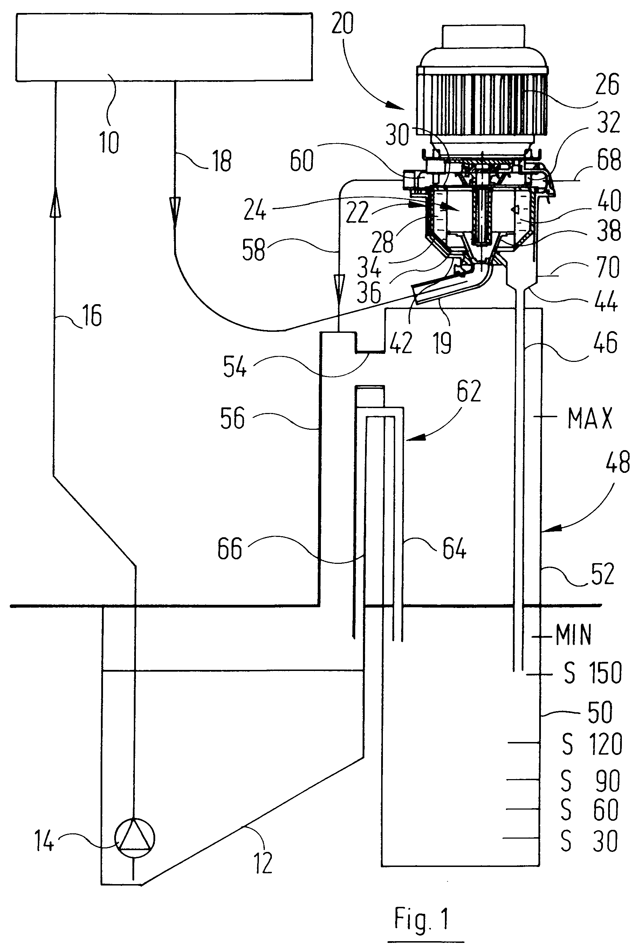

- Figur 1:: eine schematische Darstellung einer Profilschleifmaschine für Brillen in Verbindung mit ihrer Versorgungseinrichtung für Arbeitsflüssigkeit und einer erfindungsgemäßen Einrichtung zum Entfernen von Feststoffpartikeln aus dieser Arbeitsflüssigkeit; und
- Figuren 2 und 3:: ähnliche Darstellungen wie Figur 1, in welchen abgewandelte Einrichtungen zum Entfernen von Feststoffpartikeln wiedergegeben sind.

In der Zeichnung ist mit 10 insgesamt eine Schleifmaschine bezeichnet, wie sie in Optikergeschäften zum Auf-Maß-Schleifen von Brillengläsern verwendet wird. Derartige Maschinen habe einen Spindelstock, auf welchen die Brillengläser befestigt werden und eine oder mehrere Schleifscheiben, die unter Steuerung durch eine mechanische oder elektronische Kopierschablone das Material des Brillenglas-Rohlinges auf Sollkontur schleifen.

Zur Kühlung und zum Abführen des Schleifstaubes wird eine Arbeitsflüssigkeit auf Wasserbasis verwendet, die in einem Vorratsbehälter 12 enthalten ist. Aus dem Vorratsbehälter 12 saugt eine Speisepumpe 14 an, die über eine Leitung 16 mit der Schleifmaschine 10 verbunden ist. An einem Auslaß der Schleifmaschine 10 wird mit Schleifstaub angereicherte Arbeitsflüssigkeit abgegeben, und diese gelangt über eine Leitung 18 in einen Einlaßstutzen 19 einer insgesamt mit 20 bezeichneten Zentrifuge. Letztere hat ein Zentrifugengehäuse 22, in welchem eine Zentrifugentrommel 24 vertikal ausgerichtet umläuft. Die Zentrifugentrommel 24 wird von einem auf das Zentrifugengehäuse 22 aufgesetzten Elektromotor 26 angetrieben.

Die Zentrifugentrommel 24 hat eine zylindrische Umfangswand 28, bei derem oberen Ende ein radial nach innen kragender Sperrflansch 30 vorgesehen ist, der auf seiner Oberseite mit Pumpenflügeln 32 bestückt ist.

Eine konische Bodenwand 34 der Zentrifugentrommel 24 begrenzt eine kreisförmige Schlammabgabeöffnung 36. Durch diese erstreckt sich eine mit dem Einlaßstutzen 19 über eine Spaltdichtung verbundene kegelförmige Einleitglocke 38, deren horizontaler Flansch in den mit 40 bezeichneten Wasserring eintaucht, der sich bei laufender Zentrifugentrommel 24 unter dem Sperrflansch 30 aufbaut.

An eine Bodenwand 42 des Zentrifugengehäuses 22 ist ein Schlammabgabestutzen 44 angeformt, der mit einem langen nach unten hängenden Schlammspeiserohr 46 in Verbindung steht. Letzteres taucht in einen insgesamt mit 48 bezeichneten Sedimentierbehälter ein.

Der Sedimentierbehälter 48 hat einen unteren, abnehmbaren Sedimentierbehälterabschnitt 50 und einen oberen, feststehenden Sedimentierbehälterabschnitt 52. Letzterer steht in seinem obersten Abschnitt über einen horizontalen Kanal 54 mit einem vertikalen Speiserohr 56 in Verbindung, welches zum Deckel des Vorratsbehälters 12 führt und an welches auch eine Leitung 58 angeschlossen ist, die mit einem Klarwasser-Abgabekanal 60 des Zentrifugengehäuses 22 in Verbindung steht.

Das Innere des Sedimentierbehälters 48 steht ferner mit dem Inneren des Vorratsbehälters 12 über einen insgesamt mit 62 bezeichneten Heber in Verbindung. Dieser hat einen ersten Heberschenkel 64, der in den abnehmbaren Sedimentierbehälterabschnitt 50 eintaucht, sowie einen zweiten Heberschenkel 66, der in das Innere des Vorratsbehälters 12 geführt ist. Wie aus der Zeichnung ersichtlich, reicht der Heberschenkel 64 etwas tiefer als der Heberschenkel 66, so daß die im Heber am Ende einer Hebephase verbleibende Flüssigkeitssäule ins Innere des Sedimentierbehälters 48 zurückfällt.

Das Innere des Zentrifugengehäuses ist über eine erste Entlüftungsöffnung 68, die über eine nicht gezeigte wassersperrende Schikane mit dem Klarwasser-Abgabekanal 60 in Verbindung steht, sowie eine zweite Entlüftungsöffnung 70, die am schlammabgabestutzen 44 vorgesehen ist, mit der Atmosphäre verbunden.

Am Sedimentierbehälter 48 sind verschiedene Marken angedeutet: MAX bedeutet den maximalen Flüssigkeitsstand im Sedimentierbehälter 48, welcher dem höchsten Punkt des Hebers 62 entspricht. MIN bedeutet den minimalen Pegelstand im Sedimentierbehäler 48 (entspricht dem unteren Ende des Heberschenkels 66). Verschiedene Marken SXXX bezeichnen Höhen des Sedimentes im unteren Behälterabschnitt 50, welche nach dem Schleifen von XXX Brillengläsern erhalten werden.

Die oben beschriebene Einrichtung zum Entfernen von Schleifstaubpartikeln aus der Arbeitsflüssigkeit einer Schleifmaschine für Brillengläser arbeitet folgendermaßen:
Wird an der Schleifmaschine 10 das Schleifen eines Brillenglases gestartet, so werden die Speisepumpe 14 und der Elektromotor 26 in Gang gesetzt. Über die Leitung 16 wird der Schleifmaschine die benötigte Menge an Arbeitsflüssigkeit zugeführt, und diese Flüssigkeitsmenge zusammen mit dem in ihr enthaltenen Schleifstaub wird der Zentrifuge 20 zugeführt. Der Schleifstaub wird in der Zentrifuge abzentrifugiert und verbleibt in dem unter dem Sperrflansch 30 umlaufenden Wasserring 40. Das Klarwasser wird über den Sperrflansch 30 gedrückt und durch die Pumpenflügel 32 in den Klarwasser-Abgabekanal 60 gefördert, von wo es über die Leitung 58 ins Innere des Vorratsbehälters 12 zurückgeführt wird. Diese zurückgeführte Flüssigkeitsmenge ist sehr gut frei von Feststoffpartikeln, auch dann, wenn diese nur geringe Dichte haben, wie z. B. beim Schleifstaub von Kunststoff-Brillengläsern.

Ist das Schleifen eines Brillenglases beendet, so wird mit den Anhalten der Schleifmaschine 10 zugleich auch die Speisepumpe 14 und der Elektromotor 26 angehalten. Das Anhalten des Elektromotors 26 erfolgt durch entsprechende Strombeaufschlagung seiner Wicklung so, daß die Zentrifugentrommel 24 abrupt abgebremst wird. Durch den unter Trägheit zunächst noch weiterrotierenden Wasserring 40 werden die an der Umfangswand der Zentrifugentrommel liegenden Feststoffpartikel aufgenommen, und der gesamte Ring zusammen mit den Schleifstaubpartikeln sinkt mit kleiner werdender Drehzahl der Zentrifugentrommel dann durch die Schlammabgabeöffnung 36 und den Schlammabgabestutzen 44 in den Sedimentierbehälter 48.

Solange der Pegel im Sedimentierbehälter 48 unter der höchsten Stelle des Hebers 62 liegt, wird das dem Wasserring entsprechende Volumen an Arbeitsflüssigkeit für weitere Arbeitszyklen der Schleifmaschine dem Arbeitsflüssigkeits-Kreislaufentzogen. Die sich akkumulierenden schleifstaubhaltigen Wasserring-Volumina haben im Sedimentierbehälter 48 lange Zeit für ein Sichabsetzen der Schleifstaubpartikel.

Wird unter diesen Bedingungen ein nächster Schleifzyklus an der Schleifmaschine eingeleitet, erfolgt dieser genau wie oben beschrieben, mit dem einzigen Unterschied, daß sich das Volumen der im Vorratsbehälter 12 befindlichen Arbeitsflüssigkeit um das Volumen eines Wasserringes vermindert hat, was aber für die Praxis unbedeutend ist.

In der Praxis nach etwa 30 Schleifzyklen hat dann der Pegel im Sedimentierbehälter 48 eine solche Höhe erreicht, daß er geringfügig höher ist als die höchste Stelle des Hebers 62. Nun setzt die Heberwirkung ein, und aus dem Sedimentierbehälter 48 wird soviel überstehende klare Arbeitsflüssigkeit durch Heberwirkung abgezogen, bis der Pegel im Sedimentierbehälter auf die Höhe des unteren Endes des Heberschenkels 66 abgesunken ist. Die entsprechende Flüssigkeitsmenge befindet sich nun wieder im Vorratsbehälter 12. Die im Heber 62 verbleibende Flüssigkeitssäule fällt in den Sedimentierbehälter 48 zurück.

Die Einrichtung arbeitet anschließend wieder wie zunächst beschrieben, das heißt, für jeden Schleifzyklus vergrößert sich das Volumen des im Sedimentierbehälter 48 befindlichen Wassers um ein Wasserringvolumen, während der Pegel im Vorratsbehälter 12 um ein Wasserringvolumen abnimmt. Nach 30 Schleifzyklen erreicht der Pegel im Sedimentierbehälter 48 wieder das obere Ende des Hebers 62, so daß wiederum eine Charge durch Sedimentation gereinigter Arbeitsflüssigkeit in den Vorratsbehälter 12 zurückströmt.

Mit zunehmender Betriebszeit steigt im unteren Sedimentierbehälterabschnitt 50 das Niveau der dort gebildeten Sedimentschicht, und erreicht die Sedimentschicht die Nachbarschaft des unteren Endes des Schlammspeiserohres 46, wird der Sedimentierbehälterabschnitt 50 unmittelbar nach einem Heberzyklus vom Sedimentierbehälterabschnitt 52 abgenommen und sein Inhalt wird in ein größeres Faß gegeben, daß dann über ein Entsorgungsunternehmen in größeren zeitlichen Abständen entsorgt wird.

Bei dem oben beschriebenen Ausführungsbeispiel erfolgte das Überführen klaren Überstandes aus dem Sedimentierbehälter 48 in den Vorratsbehälter 12 unter Verwendung des Hebers 62. Der Kanal 54 stellt nur eine zusätzliche Sicherheitsmaßnahme dar, die bei etwaigem Verstopfen des Hebers 62 einspringt. Darüber hinaus verhindert der Kanal 54 ein Rücksteigen von Schaum aus dem Vorratsbehälter 12 in die Zentrifuge 20. Der Schaum wechselt dann vielmehr bevorzugt in den Sedimentierbehälter 48.

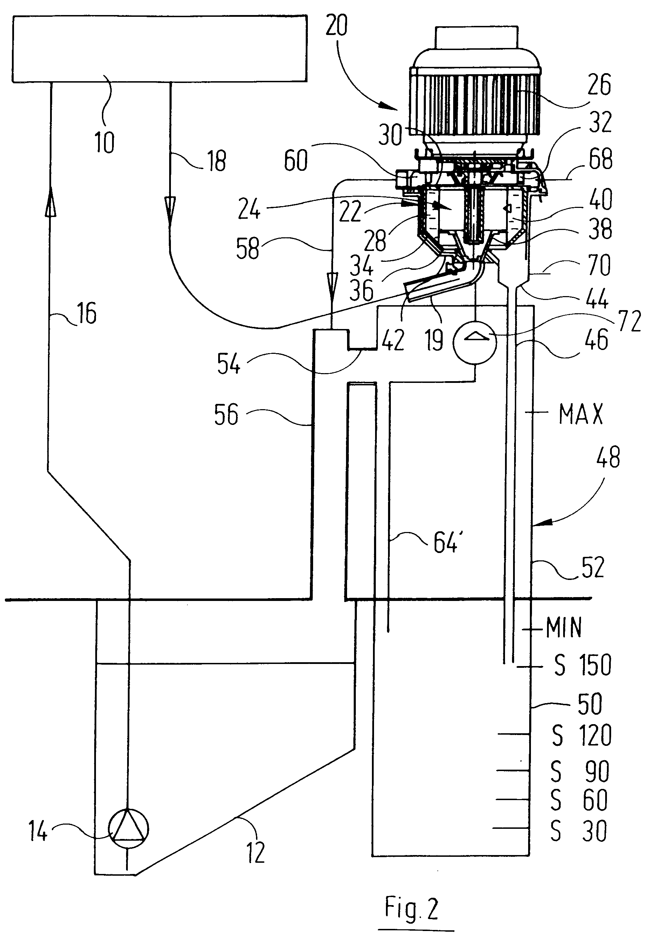

Beim Ausführungsbeispiel nach Figur 2 ist der Heber 62 weggelassen, an seiner Stelle ist eine Rückförderpumpe 72 vorgesehen, die saugseitig mit einer dem Heberschenkel 64 entsprechenden Saugleitung 64' verbunden ist und deren Ausgang mit dem Einlaßstutzen 19 in Verbindung steht.

Beim Ausführungsbeispiel nach Figur 2 wird die Rückförderpumpe 72 jeweils nach einer vorgegebenen Anzahl von Schleifzyklen oder gesteuert durch einen nicht wiedergegebenen Niveaufühler, der auf dem Pegel MAX angeordnet ist, in Gang gesetzt. Das aus dem Sedimentierbehälter 48 abgezogene klare Wasser wird somit nochmals durch die Zentrifuge gefördert, bevor es dann über die Leitung 58 und das Speiserohr 56 den Vorratsbehälter erreicht.

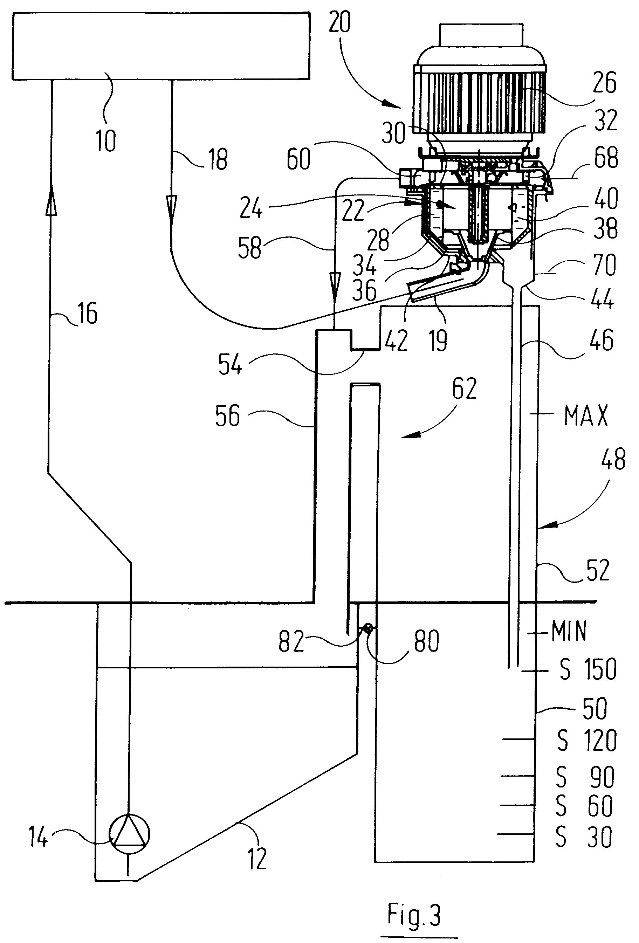

Beim Ausführungsbeispiel nach Figur 3 ist ebenfalls der Heber 62 weggelassen, das Überführen durch Sedimentation gereinigten klaren Wassers aus dem Sedimentierbehälter 48 in den Vorratsbehälter 12 erfolgt ausschließlich über den als Überlauf dienenden Kanal 54. Auch bei dieser Variante hat man eine lange Verweilzeit der abgesunkenen Wasserringe im Sedimentierbehälter 48.

Damit der abnehmbare Behälterabschnitt 50 ohne Verschütten von Wasser abgenommen werden kann, ist sein oberer Abschnitt über eine ein Ventil 80 enthaltende lösbare Leitung 82 mit dem Vorratsbehälter 12 verbunden. Das Ventil 80 wird kurz vor dem Abnehmen des Behälterabschnittes 50 vorübergehend geöffnet, so daß das über der Leitung 82 in dem Sedimentierbehälter 48 stehende Wasser ablaufen kann.

## Patentansprüche

1. Einrichtung zum Entfernen von Feststoffpartikeln aus einer Arbeitsflüssigkeit, mit einer Zentrifuge (20), die eine Zentrifugentrommel (24), ein letztere umgebendes Zentrifugengehäuse (22) und einen auf die Zentrifugentrommel (24) arbeitenden Antriebsmotor (26) aufweist, wobei die Zentrifugentrommel (24) bei ihrem oberen Ende einen radial nach innen kragenden Sperrflansch (30) hat und in ihrer Bodenwand (34) mit einer Schlammabgabeöffnung (36) ausgebildet ist und wobei eine Bodenwand (42) des Zentrifugengehäuses (22) mit einer Schlammabgabeöffnung (44) versehen ist, während im oberen Abschnitt des Zentrifugengehäuses (22) ein Klarwasser-Abgabekanal (60) vorgesehen ist, und mit einem unter dem Zentrifugengehäuse (22) angeordneten Sedimentierbehälter (48), dadurch gekennzeichnet, daß das Volumen des Sedimentierbehälters (48) ein Vielfaches des Volumens des sich in der Zentrifugentrommel (24) unter dem Sperrflansch (30) aufbauenden Wasserringes (40) beträgt, und daß von einem Punkt des Sedimentierbehälters (48), dessen Pegel ebenfalls einem Vielfachen des Volumens des Wasserringes (40) entspricht, eine Reinwasser-Abgabeleitung (54; 62; 64') ausgeht.

2. Einrichtung nach Anspruch 1, dadurch gekennzeichnet, daß die Reinwasser-Abgabeleitung (54) als Überlauf ausgebildet ist und im oberen Endabschnitt des Sedimentierbehälters (48) angeordnet ist.

3. Einrichtung nach Anspruch 1 oder 2, dadurch gekennzeichnet, daß die Reinwasser-Abgabeleitung (62) als Heberleitung ausgebildet ist, deren einer Schenkel (64) etwa auf halber Höhe des Sedimentierbehälters (48) endet.

4. Einrichtung nach einem der Ansprüche 1 bis 3, dadurch gekennzeichnet, daß die Schlammabgabeöffnung (44) der Zentrifuge (20) über ein Schlammspeiserohr (46) mit dem Sedimentierbehälter (48) verbunden ist, dessen unteres Ende näher beim Boden des Sedimentierbehälters (48) liegt als das Ende der Reinwasser-Abgabeleitung (54; 62; 64'), jedoch soweit vom Boden des Sedimentierbehälters (48) beabstandet ist, daß sich unter ihm eine Sedimentschicht (S30, S60, ...) aufbauen kann, die von einer Vielzahl aus der Zentrifugentrommel (24) abgesunkener Wasserringe (40) erhalten wird.

5. Einrichtung nach Anspruch 4, dadurch gekennzeichnet, daß sich das Schlammspeiserohr (46) und die Reinwasser-Abgabeleitung (54; 62; 64') diametral gegenüberliegen.

6. Einrichtung nach einem der Ansprüche 1 bis 5, dadurch gekennzeichnet, daß ein unterer Abschnitt (50) des Sedimentierbehälters (48) abnehmbar ist.

7. Einrichtung nach Anspruch 6, dadurch gekennzeichnet, daß ein oberes Teilvolumen des abnehmbaren Behälterabschnittes (50) entleerbar ist, vorzugsweise über die als Heberleitung (62) oder Ansaugleitung (64') ausgebildete Reinwasser-Abgabeleitung oder auch über eine ein Ventil (80) enthaltende Leitung (82), die mit dem Vorratsbehälter (12) verbunden ist.

8. Einrichtung nach einem der Ansprüche 1 bis 7, dadurch gekennzeichnet, daß der Sedimentierbehälter (48) ein geschlossener Behälter ist.

9. Einrichtung nach einem der Ansprüche 1 bis 8, dadurch gekennzeichnet, daß der Klarwasser-Abgabekanal (60) an ein Speiserohr (56) des Vorratsbehälters (12) angeschlossen ist, welches vorzugsweise dem Abgabeende der Reinwasser-Abgabeleitung (54; 62) benachbart ist.

10. Einrichtung nach einem der Ansprüche 1 bis 9, dadurch gekennzeichnet, daß die Reinwasser-Abgabeleitung (64') mit der Saugseite einer Rückförderpumpe (72) verbunden ist, deren Auslaß mit dem Einlaß (19) der Zentrifuge (20) verbunden ist.
